# EUROPEAN PATENT APPLICATION

(11) **EP 1 859 759 A1**
(43) Date of publication of application: **28.11.2007**
(21) Application number: 06725785.7
(22) Date of filing: 24.02.2006
(51) Int. Cl.: A61C 15/02, A21D 13/00

(54) **SMALL BREAD STICK FOR SERVING FOOD**

(30) Priority: 25.02.2005 ES 200500436
(71) Applicant: Valles Luque, Lara, 08010 Barcelona (ES)
(72) Inventor: Valles Luque, Lara, 08010 Barcelona (ES)
(74) Representative: Urizar Anasagasti, José Antonio
(86) International application number: PCT/ES2006/000087
(87) International publication number: WO 2006/089992

(57) **Abstract**

The invention relates to a small stick of the type that is used in the food service industry, but which, instead of being made from wood, plastic or metal, is made from edible materials suited to the use thereof, both in terms of hardness and shape as wellas in terms of flavour such as to be compatible with the food being served. The basic form of the stick comprises a body (1), a pointed end (2) for piercing the food and an opposing flat end (3) that enables the stick to be gripped comfortably.

## Description

### OBJECT OF THE INVENTION

The object of the present invention is a small pricking stick of the type of the ones used in catering, which, instead of wood, plastic or metal, is made of eatable materials according to the required functionality, as much in hardness and form as in compatible flavours with the food to be pricked. The basic form is made of a body 1 with a pointed end 2 to prick in and the other end 3 flattened to facilitate the holding the stick comfortably.

### BACKGROUND OF THE INVENTION

The sticks to prick are a very used element, as much in the professional catering as well as in particular homes. The small sticks to prick appetizers, as can be small portions of garlic sausage, cheese, tortilla, jam, olives etc. are made traditionally of wood or plastic, and the bigger sticks used in elaborated dishes, such as skewers for meat, fish or vegetables usually are made of wood or metal.

As much in one case as in the other one, these sticks have to be thrown away (plastic wood) or washed (metal) with the consequent cost of raw material in the first case or detergent and water in the second. Furthermore, with the use of these sticks it is not always possible to have an appropriate hygienic behaviour, if one does not have a suitable site in where to deposit the stick.

We are not aware of identical antecedents with the functionality that offers the product at issue. The sticks of wood or plastic do prick but they are not eaten. Breadsticks typical of bakery have a form of a stick but they do not puncture.

The object of this invention is to avoid the disadvantages previously mentioned, such as the cost of raw material, which in case of being wood has an added ecological component, because it will partly avoid the cutting of trees, and in case of being plastic it will avoid the contamination of those remainders, since habitually they are not recycled, offering in addition multiple advantages, such as to provide a flavour component since they can be eaten and allow the combination of flavours; cleaning and hygiene, because the sticks are not left in the dishes; no rests are left stuck, because they are ingested with the stick itself since this one is eatable.

### GENERAL DESCRIPTION OF THE INVENTION

The small stick has at least one pointed end and is elaborated with eatable ingredients (flours, water, salt, leavenings, oil among others), and with a baking that provides the sufficient hardness so that it can be used like a stick of the wooden type in order to prick different foods (garlic sausage, cheese, tortilla, ham, fruits, etc.) with the added value of the possibility to be eaten, and of tasting like bread.

The raw material and the size depend on the particularities of the different versions, such that, respecting the basic components that will give him a taste of bread, there can exist an wide functional cover, whereby it can have forms with more or less length or section diameter.

If the foods pricked in the stick were of the fruit type or frosted fruit type, the stick can be coated with caramel or chocolate, thus turning the taste of the stick and the flavour and the pricked food more compatible.

The ends of the stick can have different forms, but at least one end is pointed, being in addition this end able to have harpoon form to avoid that a food already pricked falls. The opposite end can have, like the conventional sticks, pointed forms but in general it will have flattened form.

### BRIEF DESCRIPTION OF THE DRAWINGS

Fig 1 is a view of a stick with a tipped end, of circular section in its center body and with flattened form in the other end.
Fig 2 is a view of a stick with end in an end, of rectangular section in its centre body and with flattened form at the other end
fig 3 is a view of a skewer stick with a pointed tip at one of its ends and circular section in its centre body.
Fig 4 is a view of an end tip of the skewer stick in harpoon form.

### PREFERRED EMBODIMENT OF THE INVENTION

The manufacturing method includes the steps of preparation of the mass or kneading, the leaving to stand of the mass or fermentation, the extension of the mass by means of a roller, giving the adequate thickness to the type of stick to be produced, the cutting of the mass in individual pieces, the stretching at the end or ends to form the tip, the placing in a tray of the pieces already formed, the painting of the pieces with hardening agents of the surface, the cooking of these individual pieces in a furnace, the cooling and packaging of the pieces already prepared.

The preparation and kneading of the mass is carried out in a mixture bucket, in which the proportion in weight of the included ingredients can be between the following values:
64% - 75 % of wheat flour;
30% - 33% of water;
1.2% - 1.3 % of marine salt;
1.2% - 1,9 % of leavening; and
1.5 % - 2 % of virgin olive oil
0.5% - 1 % L-cysteine

Strong flour with a high percentage of protein will be used (13-14% of protein) since it allows to hydrate the mass at an elevated level, forming a more compact structure. The percentage of leavening is lesser with respect to the habitual one in other mixtures to make bread, since due to the reduced dimensions of the final product, it does not interest that much that the mass grows too much, and the olive oil, besides giving him a good flavour compatible with the culinary aim for which the stick is destined, will avoid in part that the piece sticks to the tray during the baking time. The cysteine allows that the flour does not take tenacity, that is to say, that it behaves like an elastic structure, very elastic, so that it can stretch without taking volume. The mass is left to stand the during a time comprised within 8 and 10 minutes at room temperature (20°-25°C) so that the fermentation takes place but without producing an excessive growth of the mass.

Once the mass is prepared it can be unloaded by average conventional mechanic means (conveyor belt) into a zone of rollers which are adjustable to give to the mass the adapted thickness, and, by means of cutting means, to produce the individual pieces. Next, by means of stretching, moulding or other conventional methods the end or ends of the small sticks will be formed, which, in their version of a bigger size have sufficient length and diameter of section to be able to be inserted into several food pieces.

The baking is done in trays of a nonsmooth surface which is covered in addition with a sheet of paper impregnated in oil, with which it is prevented that the pieces that are being baked remain stuck to the tray. The time of baking will be of 5 to 10 minutes depending on the thickness of the stick and to a temperature between 220-240°C.

After the cooling, the bread sticks are prepared and are ready to be packaged individually or in small packages so that its conservation from the packaging on to the consumption keeps the suitable norms of hygiene. This packaging must be sufficiently hermetic to avoid that the sticks can become damp, thereby achieving that their properties, as it can be the hardness, remain unalterable.

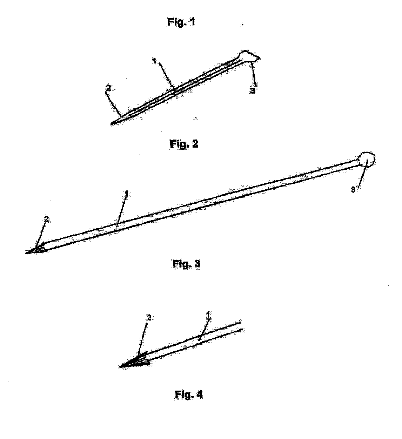

Fig 1 shows a preferred embodiment of the bread stick, consisting of a pointed end 2, used to prick, joint to the centre body 1, of cylindrical form, that is joint as well to another flattened end 3, with which the user takes the stick. The dimensions of the stick can vary depending on their application, wherein the centre body has lengths between 80 and 250 mm and the diameter of the section is between 2 and 6 mm.

In a second embodiment, whose functionality is that of being compatible with sweet flavours, the percentage of salt which the recipe of the preferred embodiment has is eliminated, replacing it in equivalent amounts by components that give a sweet flavour such as sugar or saccharin.

It is obvious that this invention described herein by means of a preferred embodiment can be varied in different ways. Such variations do not have to be seen like a departure point from the scope of the invention, and all the modifications that would be obvious for expert people in the art are understood to be included within the scope of the following claims:

## Claims

1. Bread stick for pricking foods **characterized in that** it is constructed from a mass of bread, in which the weight proportion of the ingredients is the following: 64% - 75% of strong wheat flour with a high percentage of protein (13% -14% of protein); 30% - 33% of water; 1,20% - 1, 30% of marine salt; 1, 20%-1, 90% of leavening; 1.5% - 2% of virgin olive oil and 0.5% - 1% of L-cysteine, wherein to this mass of bread is given a form that consists of a pointed end (2), a centre body (1), and one flattened end (3), and once this mass has acquired this form it is baked so that it acquires the necessary hardness to be able to prick into foods.

2. Bread stick for pricking foods **characterized in that** it is constructed from a mass of bread, in which the weight proportion of the ingredients is the following: 64% - 75% of strong wheat flour with a high percentage of protein (13% -14% of protein); 30% - 33% of water; 1% - 3% of sugar; 1, 20% - 1, 90% of leavening; 1.5% - 2% of virgin olive oil and 0.5% - 1% of L-cysteine, wherein to this mass of bread is given a form that consists of a pointed end (2), a centre body (1), and a flattened end (3), and once this mass has acquired this form it is baked so that it acquires the necessary hardness to be able to prick into foods.

3. Bread stick to prick foods according to claim 1 or 2, **characterized in that** its centre body has a length between 80 and 250 mm and a section with a diameter between 2 and 6 mm.

4. Bread stick to prick foods according to claims 2 and 3, **characterized in that** the centre body (1) is coated with chocolate or caramel.
